# FASCICULE DE BREVET EUROPEEN

(11) **EP 3 377 854 B1**
(45) Date de publication et mention de la délivrance du brevet: **25.12.2019**
(21) Numéro de dépôt: 16801744.0
(22) Date de dépôt: 18.11.2016
(51) Int. Cl.: G01C 11/02, G01S 13/90, G01S 17/89

(54) **PROCÉDÉ D'ACQUISITION D'IMAGES D'UNE SCÈNE, À PARTIR D'UN CAPTEUR À BORD D'UN PORTEUR EN DÉPLACEMENT, AVEC ASSERVISSEMENT DE SA LIGNE DE VISÉE**
VERFAHREN ZUR ERFASSUNG VON BILDERN EINER SZENE, VON EINEM SENSOR AN BORD EINES BEWEGLICHEN TRÄGERS, MIT SERVOSTEUERUNG VON DESSEN SICHTLINIE
METHOD FOR ACQUIRING IMAGES OF A SCENE, FROM A SENSOR ON BOARD A MOVING CARRIER, WITH SERVOCONTROL OF ITS LINE OF SIGHT

(30) Priorité: 20.11.2015 FR 1502431
(43) Date de publication de la demande: 26.09.2018
(73) Titulaire: Thales, 92400 Courbevoie (FR)
(72) Inventeur: HORAK, Raphaël, 78995 Elancourt (FR)
(74) Mandataire: Henriot, Marie-Pierre
(86) Numéro de dépôt international: PCT/EP2016/078146
(87) Numéro de publication internationale: WO 2017/085259

(56) Documents cités:
- WO-A1-98/08193
- WO-A1-2014/122625
- FR-A1- 2 884 312
- FR-A1- 2 944 110
- US-A1- 2005 177 307
- US-A1- 2012 249 739
- US-A1- 2014 266 869

## Description

Le domaine de l'invention est celui de l'acquisition d'images par asservissement de la ligne de visée d'un capteur couplé à du traitement d'images, par exemple pour des applications de surveillance ou de reconnaissance.

Le document US 2005/177307 décrit un système de reconnaissance aérienne et le document US 2012/249739 présente un procédé de balayage stéréoscopique à partir d'une plateforme en mouvement.

Les figures de balayage de la ligne de visée (LdV) de capteurs optiques ou de radars asservis implémentés dans des PODs, aéronefs ou véhicules terrestres sont des figures classiques du type :
- balayage latéral à angle constant, appelé aussi mode strip-map dans le domaine radar,
- balayage « spotlight » sur un point fixe (= balayage de poursuite sur point fixe),
- balayage de poursuite sur cible mobile,
- balayage circulaire pour les applications terrestres.

Le premier balayage permet de balayer une bande de terrain mais avec un point de vue constant entre l'aéronef et le point au sol qui est balayé.

Le deuxième permet de voir un objet au sol suivant différents points de vue mais couvre une zone au sol très limitée.

Le troisième est une variante du deuxième et ne garantit pas la multiplicité des points de vue.

Le quatrième est similaire au premier et présente un angle d'azimut constant.

Ces quatre classes de balayage ne permettent pas de visualiser avec une bonne résolution angulaire une grande étendue de sol suivant différents de points de vue.

Le but de l'invention est de pallier ces inconvénients.

La solution apportée consiste à appliquer un mode d'asservissement spécifique à la ligne de visée du capteur par plusieurs séries de balayages au sol aller, chaque balayage aller étant généralement suivi d'un balayage au sol retour rapide, auxquels se combinent des micromouvements de "step-and-stare" (translation et pointage selon une traduction sommaire) qui permettent d'obtenir des images suffisamment stables et éclairées malgré les mouvements rapides des balayages. Un traitement d'images permet de contrôler cet asservissement pour gagner en précision.

Plus précisément l'invention a pour objet un procédé d'acquisition d'images d'une scène au sol prédéterminée, à partir d'un porteur en déplacement selon une trajectoire, et équipé d'un capteur optique ayant une ligne de visée, qui comprend une étape d'acquisition par le capteur d'images successives de la scène au cours du déplacement du porteur, et une étape d'asservissement de la direction angulaire de la ligne de visée par une unité de traitement reliée au capteur, l'acquisition étant réalisée:
- pour une première position du porteur sur sa trajectoire, avec un asservissement de la direction angulaire de la ligne de visée permettant d'effectuer un balayage d'une bande de terrain prédéterminée de la scène, dit balayage aller, combiné à un balayage en mode « step-and-stare » un premier bandeau d'images étant ainsi acquis,
- et en ce qu'au moins un autre bandeau d'images est acquis sur une même zone de terrain que le premier bandeau en réitérant ces étapes de balayage pour au moins une autre position du porteur sur sa trajectoire, chaque image d'un autre bandeau étant acquise pour une portion de bande de terrain avec un taux de recouvrement avec la (ou les) image(s) du premier bandeau pour la même portion de bande de terrain, supérieur à un fort taux prédéterminé de recouvrement, les images recouvrantes d'un bandeau à l'autre issues d'une même portion de terrain étant ainsi respectivement acquises au cours de ces itérations selon différentes directions de la ligne de visée.

Il est principalement caractérisé en ce que le mode « step-and-stare » qui comporte des micro-mouvements de translation dits « steps » présentant une amplitude contrôlée par l'unité de traitement, comprend :
∘ au moins un « step » à composante principale perpendiculaire au balayage aller et dit latéral, combiné à
∘ au moins un « step » à composante principale parallèle au balayage aller et dit longitudinal,
∘ d'un micro-mouvement « stare » bi-axe pour compenser un mouvement de translation de la ligne de visée pendant l'acquisition de chaque image,
et en ce que l'asservissement de la direction angulaire de la ligne de visée est réalisé par traitement d'images sur les images acquises.

Cette solution avec des mouvements de balayage adaptés de la ligne de visée, permet à la fois de couvrir une zone large éventuellement sous forme de différentes bandes de terrain contigües ou non et de visualiser l'ensemble de ces points balayés suivant des angles différents. Elle permet en particulier de fournir des bandeaux d'images couvrant une grande surface du sol à des instants et des angles de point de vue différents.

Il respecte grâce à un mouvement spécifique de « step-and-stare » bidirectionnel, synchrone avec l'asservissement principal de la ligne de visée, un temps d'éclairement suffisamment long pour chaque image et permet ainsi de garantir aux images une qualité suffisante.

La solution permet aussi, après traitement des images des bandeaux, ceux-ci contenant les points au sol qui sont vus suivant différents angles de visée, de construire des bandeaux d'images conformes géométriquement, c'est-à-dire superposables à une ortho-photographie ou une carte géographique, ce que ne permettent pas les autres méthodes quand le déplacement du porteur est important par rapport au relief de la zone.

La solution proposée utilise les nouveaux concepts suivants :
- Balayage et contre-balayage frontal répété de la ligne de visée, suivi d'acquisitions, sur une ou plusieurs bandes au sol, le porteur équipé du capteur étant en mouvement, de manière à revenir plusieurs fois (typiquement entre 5 et 20 fois) sur le même point du sol avec des points de vues différents et ceci pour tous les points d'une bande de terrain de large étendue longitudinale (ou le cas échéant pour tous les points de différentes bandes de terrain parcourues en parallèle),
- Step-and-stare deux axes combinant en plus des micro-mouvements continus de step-and-stare classique, des steps and stare latéraux pouvant être importants en amplitude, le tout combiné avec du traitement d'images pour assembler correctement les images de chaque bandeau. Alors que dans l'état de la technique le micro-mouvement est mono-axe, une autre particularité de ce step-and-stare est qu'il introduit un micro-mouvement stare bi-axe pour éliminer le flou et améliorer la qualité de l'image pendant son temps d'intégration. Il laisse aussi la possibilité de rajouter une composante rotative de l'image lors du stare, assurant ainsi un assemblage le plus parfait possible des images dans le bandeau d'images généré.
- Production simultanée de divers bandeaux d'images dont chaque bandeau correspond à une bande de terrain ayant une forme contrôlable en forme à la fois en largeur et longueur.
- Production pour une même bande de terrain choisie dans la scène de différents bandeaux superposés à différents instants réguliers et pris suivant des points de vue différents.
- Possibilité de généraliser les bandes à des scènes non limitées dans le sens de la longueur (bandes se déroulant suivant l'avancée du porteur).

Le procédé est réalisable en temps réel au fur et à mesure de l'avancement du porteur sans contrainte imposée sur la trajectoire de celui-ci : l'asservissement compense les mouvements du porteur lors du balayage des bandes au sol.

La première position et les autres positions successives du porteur servant de base au balayage peuvent être soit uniques lors du balayage, soit multiples et décomposées en autant de positions qu'il y a d'images lors du balayage lorsque le porteur se déplace au cours du balayage.

Chaque image d'un autre bandeau est avantageusement acquise pour une portion de bande de terrain, avec une précision d'alignement avec la (ou les) image(s) du premier bandeau pour la même portion de bande de terrain, supérieure à une précision d'alignement prédéterminée.

L'asservissement de la direction angulaire de la ligne de visée est avantageusement réalisé par traitement d'images sur les images acquises pour qu'au sein d'un même bandeau, des images adjacentes soient alignées avec une qualité d'alignement supérieure à une qualité prédéfinie.

L'asservissement de la direction angulaire de la ligne de visée est avantageusement réalisé par traitement d'images sur les images acquises pour qu'au sein d'un même bandeau, des images adjacentes aient un taux de recouvrement supérieur à un faible taux de recouvrement prédéterminé, de manière à obtenir un bandeau continu.

L'asservissement de la direction angulaire de la ligne de visée est de préférence réalisé par traitement d'images sur les images acquises pour que les images provenant de deux bandeaux sur une même portion de scène soient alignées avec une qualité d'alignement supérieure à une qualité prédéfinie.

Le micro-mouvement « stare » bi-axe peut en outre être associé à un mouvement contre-rotatif de la ligne de visée déterminé par l'unité de traitement, pour compenser un mouvement de rotation de la ligne de visée pendant l'acquisition d'image ou pour aligner le mieux possible les images entre elles.

Selon une caractéristique de l'invention, au moins une autre bande de terrain prédéterminée est associée à la scène et est parcourue par le balayage effectué à partir desdites positions du porteur et le mode « step-and-stare » comprend en outre au moins un mouvement latéral de changement de bande, pour passer d'une bande de terrain à une autre bande de terrain.

Ce mouvement latéral de changement de bande peut être combiné à un mouvement frontal de changement de bande.

Le balayage aller est généralement effectué dans le sens de la trajectoire.

Généralement, un contre-balayage inverse au balayage aller, dit contre-balayage ou balayage retour, est effectué suite au balayage aller et avant la réitération.

Ce contre-balayage peut être direct ou être lui-même combiné à un balayage en mode step-and-stare. En effet, des images sont éventuellement acquises pendant le contre-balayage qui est combiné à un balayage en mode « step-and-stare » avec des micro-mouvements de translation dits « steps » qui présentent une amplitude contrôlée par l'unité de traitement pour que les images successivement acquises se recouvrent partiellement, qui comprend :
1. au moins un « step » perpendiculaire au contre-balayage et dit latéral, pour balayer la zone latéralement, combiné à
2. au moins un « step » parallèle au contre-balayage et dit step longitudinal pour balayer la zone longitudinalement,
3. un micro-mouvement « stare » bi-axe pour compenser un mouvement de translation de la ligne de visée pendant l'acquisition de chaque image.

On obtient ainsi un procédé qui permet :
- d'asservir la ligne de visée du capteur d'un porteur en mouvement, de manière à ce que celle-ci balaye une large scène au sol tout en garantissant que chaque point du sol est vu plusieurs fois avec des angles de point de vue différents couvrant le plus grand éventail d'angles possibles ;
- de reproduire simultanément un ou plusieurs bandeaux d'images contigües (ou adjacentes) et se recouvrant partiellement, et correspondant à la scène librement choisie par l'opérateur ;
- que n'importe quel point contenu dans ces bandeaux soit reconstitué temporellement suivant différents points de vue, recouvrant un domaine angulaire large, rendant possible par exemple des traitements de restitution 3D des objets contenus dans ces bandeaux ;
- que les images servant à la reconstitution des bandeaux soient corrigées en termes de conformité en exploitant les informations 3D résultant de la multiplicité des points de vue sur un domaine angulaire assez étendu.

Il respecte en outre les contraintes d'asservissements liés au capteur : vitesse de rotation et d'accélération de la ligne de visée.

D'autres avantages du procédé peuvent être cités comme :
- permettre à l'opérateur de voir en temps réel, suivant différents points de vue, des objets de la scène désigné par lui-même,
- rendre possible une cartographie 3D sur l'ensemble des bandeaux,
- rendre possible des modes de bandeaux déroulants en continu (non limités spatialement dans la direction du mouvement du porteur),
- rendre possible la concaténation des bandeaux en un bandeau plus large à n'importe quel moment de la trajectoire (notion de zone de surveillance programmable en temps réel),
- permettre une trajectoire du porteur librement choisie, et des mouvements de roulis, tangage, lacet du porteur, dans la limite imposée par le système (ligne de visée qui doit continuer à être capable de balayer les bandeaux).

D'autres caractéristiques et avantages de l'invention apparaîtront à la lecture de la description détaillée qui suit, faite à titre d'exemple non limitatif et en référence aux dessins annexés dans lesquels :
les figures 1 illustrent schématiquement vu de dessus un exemple d'acquisition d'images à partir d'un capteur embarqué à bord d'un aéronef et pour une scène avec 3 bandes de terrain disjointes non refermées sur elles-mêmes (fig 1a), avec 3 bandes de terrain dont 2 refermées sur elles-mêmes (fig 1b), la figure 1c illustrant de façon plus détaillée des balayages consécutifs menés en parallèle sur deux bandes de terrains distinctes,
les figures 2 illustrent schématiquement vu de dessus un exemple d'acquisition d'images en mode « step-and-stare » selon l'état de la technique (fig 2a) et selon l'invention (fig 2b),
la figure 3 illustre schématiquement un exemple de mouvement de la ligne de visée d'un capteur selon le procédé de l'invention, les site et gisement étant exprimés en degrés.

D'une figure à l'autre, les mêmes éléments sont repérés par les mêmes références.

On va décrire l'invention en considérant que la scène dont on souhaite acquérir des images est prédéterminée et divisée en plusieurs bandes de terrain éventuellement disjointes et éventuellement parallèles, mais pas nécessairement. On désigne par bande, une zone de terrain de dimension longitudinale moyenne plus grande que sa dimension latérale moyenne. Ces bandes correspondent à l'espace terrestre sous le porteur, qui peut présenter des infrastructures, mais peut être généralisé à n'importe quel autre type de surface de la scène visible depuis le porteur, par exemple les façades de bâtiments vus d'un véhicule terrestre.

La forme de la scène à balayer pouvant être quelconque, les bandes correspondantes peuvent également être quelconques, ainsi que leur nombre et leur orientation. La forme/largeur de la bande parcourue peut revêtir par exemple une forme d'ellipse ou de S, la largeur de la bande peut aussi s'élargir ou au contraire diminuer au cours du balayage. Des formes plus complexes peuvent être imaginées comme une forme en Y (jonction de routes), forme en étoile (carrefour et ses routes), forme comprenant des trous ou n'importe quelle forme décomposable en bandes élémentaires. L'orientation de la bande au sol est choisie librement.

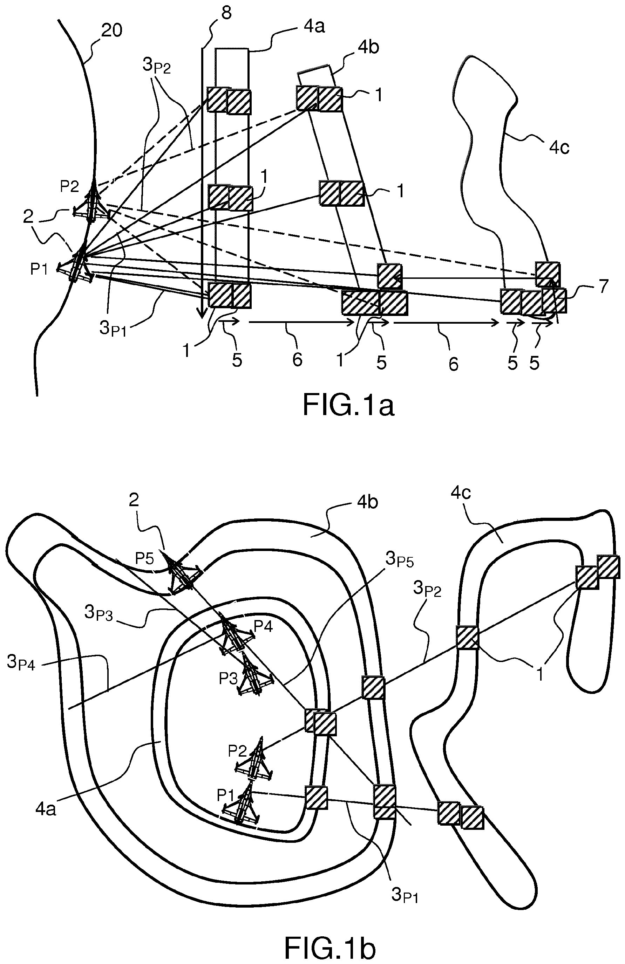

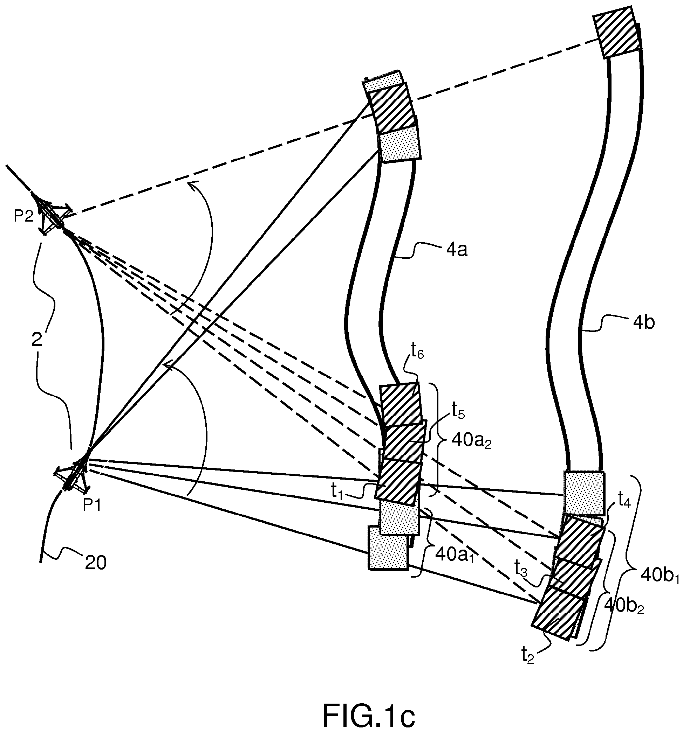

On va montrer des exemples de bandes de terrain de balayage en relation avec les figures 1.

La figure 1a illustre un premier balayage initial de trois bandes de terrain 4a, 4b et 4c à partir d'une première position P1 du porteur 2 (qui lui-même se déplace au cours de ce premier balayage), les lignes de visée étant indiquées en trait plein, et un deuxième balayage des trois bandes à partir d'une deuxième position P2 distincte du porteur, les lignes de visée étant indiquées en pointillé. Il est entendu que plusieurs cas de figure peuvent apparaître :
- le cas où le balayage inital se fait strictement à partir d'une même position avec un second balayage (et éventuellement d'autres balayages) fait(s) à partir d'un (ou de) point(s) unique(s) différent(s) du premier/précédent (ce serait le cas pour un porteur en mouvement faisant des sauts temporels pour changer de position, comme un hélicoptère mélangeant positions stationnaires servant à balayer le terrain et mouvements d'un point à l'autre pour changer de point de vue).
- Le cas où le balayage initial et les suivants se font lors d'un déplacement continu du porteur (les points (P1) correspondant à chaque image du balayage sont alors différents points successifs proches les uns des autres). La proximité de ces points dépend de la vitesse de balayage supposée suffisamment grande pour qu'un second balayage (voire d'autres balayages) puisse se faire avant de commencer un autre balayage à un point (Pi) suffisamment éloigné du précédent, mais pas trop éloigné non plus pour que les différents balayages (au moins deux) puissent se faire avant que les bandes de terrains parcourues par la ligne de visée du capteur sortent du champ visuel du capteur en train de balayer.
- Le troisième cas de figure est le cas mixant les 2 modes précédents : c'est le cas d'un porteur balayant la scène avec son capteur tout au long de son déplacement sur une portion de sa trajectoire, et effectuant des balayages pour différentes positions spatiales différentes stationnaires sur le reste de la trajectoire (si le porteur le permet).

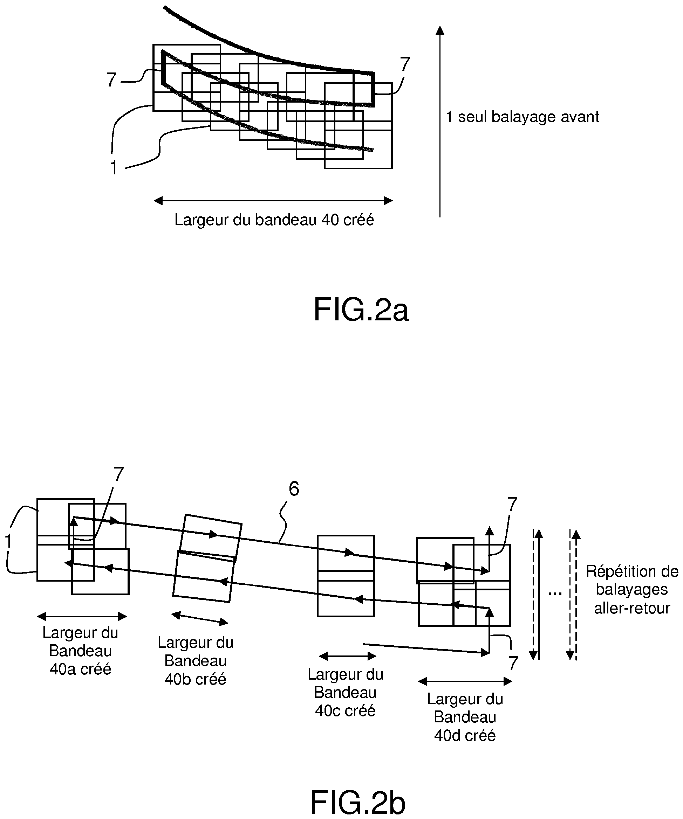

Le balayage selon l'invention couvre ces différents cas, du moment que l'on considère dans tous les cas un début de prochain balayage à des points (P1),(P2),(Pi) différents. On peut avoir i=3 mais on a typiquement de 5 à 20 positions différentes du porteur, voire plus. Les figures 1 et 2 ne montrent que le cas 1 ou le cas 2 avec un mouvement de balayage très rapide (les lignes de visée partent chacune de points (P1) quasiment confondus). Le cas 2 avec un mouvement de balayage un peu plus lent (mais tout de même encore assez rapide pour qu'à la fin du balayage, le porteur n'ait pas le temps d'atteindre la position suivante à laquelle débute le prochain balayage) n'est pas représenté sur les figures.

Dans tous les cas de figure, une image correspond à une zone de terrain (c'est l'empreinte de l'image projetée sur le terrain suivant la ligne de visée et le champ du capteur) et à un point de la trajectoire du porteur unique. On peut aussi dire qu'un point du terrain balayé 2 fois ou plus, l'est à partir de points de trajectoires (Pi) forcément différents.

Les différents balayages sont réalisés de manière que la plupart des images 1 provenant du premier balayage des bandes de terrain soient recouvertes par des images provenant du deuxième balayage (ou des balayages suivants s'ils existent).

La figure 1b illustre différentes directions de la ligne de visée au cours d'un premier balayage de deux bandes de terrains 4a et 4b refermées sur elle-mêmes et entourant dans le cas présent le porteur 2, et d'une troisième bande de terrain 4c. Une seule direction de la ligne de visée 3_{P1},..., 3_{P5}, est indiquée pour chacune des 5 positions P1, ..., P5 du porteur montrées sur la figure, et à partir de la 5^{ème} direction 3_{P5} des images sont acquises qui se superposent à certaines images acquises à partir de la position P1 du porteur. Le cas présenté est un cas d'école qui correspondrait à un mouvement très rapide du porteur et plus lent de la ligne de visée, car on n'a pas voulu surcharger la figure. En réalité on peut interpréter les 5 directions de ligne de visée comme un exemple de lignes de visée correspondant à 5 balayages complets de la ligne de visée pour 5 positions du porteur.

Le sens du balayage avant est généralement lié au sens de la trajectoire du porteur, cependant pour une bande refermée sur elle-même, (comme montré figure 1b avec les bandes 4a et 4b) ou pour une bande fortement inclinée par rapport à la trajectoire du porteur (voir bande 4c de la figure 1b), le sens du balayage «avant» est déterminé par l'unité de traitement de façon à minimiser les contraintes de débattement de la ligne de visée au cours du mouvement du porteur et à augmenter in fine le nombre d'aller-retour sur chaque bande.

Selon l'invention décrite en relation avec les figures 1 et 2, les images 1 sont acquises par un capteur embarqué à bord d'un porteur 2 en mouvement selon une trajectoire 20.

On considère tout d'abord l'acquisition d'un premier bandeau d'images aussi désigné bandeau initial. Elle est réalisée pour une première position P1 du porteur 2 sur sa trajectoire, avec un asservissement de la ligne de visée 3 permettant d'effectuer :
- un balayage d'une première bande de terrain 4 prédéterminée de la scène, à partir d'une position initiale au sol de la ligne de visée, dit balayage aller, combiné à un balayage en mode « step-and-stare » avec des micro-mouvements de translation dits « steps », qui comprend :
   ∘ au moins un « step » perpendiculaire au balayage aller et dit latéral 5, pour balayer la bande de terrain 4 latéralement (ou plutôt latéralement), combiné à
   ∘ au moins un « step » 7 parallèle au balayage aller et dit step longitudinal pour balayer la bande de terrain longitudinalement (ou plutôt longitudinalement),
   ∘ un micro-mouvement « stare » bi-axe pour compenser un mouvement de translation de la ligne de visée pendant l'acquisition de chaque image 1.

La combinaison de ces micro-mouvements de « steps », leur longueur et leur nombre avant chaque micro-mouvement « stare » sont par exemple choisis par l'unité de traitement afin d'optimiser le temps de parcours du balayage global et/ou le temps de l'acquisition d'images sur les différentes zones de la bande de terrain. Certains steps plus long entre chaque « stare » permettent aussi de ne pas acquérir d'images sur certaines portions de la bande de terrain.

Un premier bandeau d'images est ainsi acquis sur une première bande de terrain. Plus généralement si l'on considère au moins une autre bande de terrain, les 2 bandes de terrains (ou plus) sont balayées simultanément en parallèle, grâce à des mouvements de « steps » latéraux ou frontaux supplémentaires permettant de passer d'une bande à l'autre pendant le balayage, réalisant un ensemble de bandeaux d'images initiaux couvrant ces différentes bandes de terrain. De préférence, pour que ce bandeau d'images soit continu, les images adjacentes sont partiellement recouvrantes entre elles. Un faible recouvrement des images adjacentes suffit ; ce taux de recouvrement est supérieur à un faible taux de recouvrement prédéterminé, typiquement 20% voire 10%. On opte la plupart du temps pour un taux de recouvrement minimal afin de maximiser le nombre de bandeaux stockés dans l'unité de traitement.

Une fois que ce bandeau initial (éventuellement complété par d'autres bandeaux initiaux si plusieurs bandes de terrain ont été prédéterminées) a été acquis, d'autres bandeaux d'images sont acquis pour la même bande de terrain (les mêmes bandes de terrain dans le cas général), en réitérant ces étapes de balayage pour une (et préférablement plusieurs) autre(s) positions P2 du porteur sur sa trajectoire 20. Chaque image d'un autre bandeau est acquise pour une portion de bande de terrain avec un fort taux de recouvrement avec la (ou les) image(s) du bandeau initial pour la même portion de bande de terrain. Ainsi, les images recouvrantes d'un bandeau à l'autre, issues d'une même portion de terrain sont respectivement acquises au cours de ces itérations selon différentes directions de la ligne de visée car suivant différentes positions du porteur.

Généralement, au moins une autre bande de terrain prédéterminée est associée à la scène. Sur les figures 1a et 1b, on peut voir trois bandes de terrain distinctes 4a, 4b et 4c. Alors, le mode « step-and-stare » comprend en outre au moins un mouvement latéral 6 de changement de bande de terrain, pour passer d'une bande de terrain à une autre bande de terrain. Les bandeaux d'images correspondant à des bandes de terrain distinctes peuvent être acquis en parallèle. On montre 4 bandeaux d'images figure 2b : 40a, 40b, 40c, 40d.

On va détailler à présent ces étapes. La ligne de visée 3 du capteur est asservie de manière à :
1) lui faire balayer en avant ces bandes de terrain 4 prédéterminées. Ce balayage avant de la ligne de visée (dont le parcours au sol peut atteindre et même dépasser une vitesse de 1500m/s dans le cas d'un capteur embarqué à bord d'un aéronef) est en outre combiné à
   ∘ une succession de micro-mouvements locaux de « step-and-stare » bidirectionnels. En effet, du fait de la vitesse très rapide du balayage avant de la ligne de visée (et de la vitesse très rapide de sa réalisation au sol), il est nécessaire d'introduire, dans le mouvement général du balayage avant, des micro-balayages « step-and-stare » : micro-balayage « stare » pour assurer pendant la prise d'image, une stabilité d'image et un temps d'intégration suffisants et micro-balayage « step » pour passer d'une image à l'autre. Il s'agit d'effectuer le balayage « step » par des sauts 5 ou 7 très rapides entre chaque acquisition d'image (=pour assurer le passage d'une image à l'autre sur une même bande 4) ou des sauts latéraux 6 plus grands (pour passer d'une bande à l'autre), puis d'effectuer un balayage « stare » consistant à appliquer pendant la prise d'image un micro-balayage compensant le mouvement de la ligne de visée pour permettre de réaliser des images, chacune avec un temps d'intégration long pendant lequel la prise de vue est stabilisée sur la bande de terrain.
      Ces micro-mouvements 5, 6, 7 de translation ne sont pas tous identiques d'une image à l'image suivante ; ils sont contrôlés par l'unité d'asservissement. Celle-ci doit faire des vérifications pour assurer un recouvrement partiel contrôlé entre images successives sur une même bande, mais aussi entre images adjacentes d'une même bande séparées temporellement par un retour de balayage latéral appliqué lors du passage de la première bande aux autres bandes de terrain et retour à la première bande. Ces vérifications consistent à mesurer par moyens inertiels, combinés ou non avec du traitement d'images, le taux de recouvrement entre les images adjacentes d'une même bande et à vérifier qu'un recouvrement minimal (respectant un critère préétabli par le système) existe entre celles-ci.
      De manière générale, les micro-mouvements de «step» se décomposent en une composante 5 ou 6 perpendiculaire à la direction du balayage avant (5 est un «step» de petite amplitude correspondant au passage d'une image à la suivante à l'intérieur d'une bande, 6 est un «step» de plus grande amplitude correspondant au passage d'une bande à l'autre), et en une composante 7 parallèle à la direction du balayage avant. Les « steps » dont la composante principale est parallèle à la direction du balayage avant sont dits « steps » frontaux ; les « steps » dont la composante principale est perpendiculaire à la direction du balayage avant sont dits « steps » latéraux. Différentes figures de balayage de ces steps peuvent être effectuées. Lorsqu'une seule bande est à balayer, on peut par exemple réaliser un balayage en lacets, avec une succession de steps 5 exclusivement latéraux (à composantes principales latérales) pour parcourir le bandeau 40 latéralement comme montré figure 2a, suivie d'un « step » 7 exclusivement frontal (à composante principale frontale) pour réaliser une avancée frontale de la bande, puis une succession de « steps » exclusivement latéraux dans le sens opposé aux précédents pour parcourir la bande latéralement dans l'autre sens, etc. On peut bien sûr prévoir des figures de balayage moins simples utilisant les mêmes « steps » élémentaires mais combinés différemment.
      Les micro-mouvements de « stare » pour compenser le mouvement de la LdV pendant la prise d'image sont également des mouvements de translation bi-directionnels ; ils ne sont pas représentés sur les figures. Pour gagner en précision sur l'assemblage des images, un micro-balayage contre-rotatif est avantageusement appliqué en rotation autour de la ligne de visée entre chaque mouvement de « step » et à chaque prise d'image lors de la fonction « stare ». En plus de la précision d'assemblage, cela permet d'offrir un temps d'intégration (ou d'illumination dans le cas d'un lidar) plus long.
   ∘ ces micro-mouvements de « steps » sont accompagnés par des mouvements latéraux 6 additionnels et contrôlés de la ligne de visée pour passer d'une bande à l'autre, ces mouvements pouvant être courts si les deux bandes sont proches, ou amples si elles sont éloignées. De même les mouvements pour passer d'une bande à l'autre peuvent être décomposés en composantes latérales et composantes frontales ; mais ces mouvements additionnels 6 ont une composante latérale généralement plus grande que leur composante frontale, sauf si les deux bandes de terrain sont décalées suivant l'axe frontal. Sur la figure 2b on a représenté quatre bandeaux 40 (bandeau 40a, bandeau 40b, bandeau 40c, bandeau 40d) correspondant respectivement à quatre bandes de terrain 4a, 4b, 4c et 4d (non représentées sur cette figure). Si la scène ne comporte qu'une seule bande, ces mouvements 6 pour passer d'une bande à l'autre n'existent pas.

La figure 1c illustre une stratégie de balayage où l'on privilégie les sauts latéraux (en azimut) de manière à d'abord parcourir toutes les bandes en parallèle en quelque sorte, puis des sauts frontaux sur les bandes les plus éloignées du porteur avant de revenir en faire sur des bandes plus proches, ceci afin de minimiser les sauts en lacet qui peuvent être plus longs à réaliser que les sauts en azimuts. De cette manière les bandes de terrain distinctes sont balayées quasiment en parallèle. Plus précisément, la figure 1c illustre de façon plus détaillée 2 balayages consécutifs respectivement effectués à partir de deux positions P1 et P2, sur deux bandes de terrains proches 4a et 4b ; sur les images référencées 1 sont indiqués l'ordre temporel d'acquisition des images lors du balayage des 2 bandes : t1, t2, ..., t6. Une fois que pour une bande de terrain, un premier bandeau d'images (bandeau initial) a été généré à partir d'une position (position P1 sur la figure avec pour les deux bandeaux initiaux (bandeau 40a1 pour la bande 4a et bandeau 40b1 pour la bande 4b des images à pointillés), un (ou plusieurs) autre(s) bandeau(x) d'images de la même bande de terrain va être généré au cours des itérations suivantes, chaque autre bandeau étant obtenu à partir d'une autre position du porteur 2 (position P2 sur la figure avec pour ces deux autres bandeaux (bandeau 40a2 pour la bande 4a et bandeau 40b2 pour la bande 4b des images rayées). Cela permet d'acquérir plusieurs fois des images d'un même point du sol avec des points de vues différents et ceci pour tous les points d'une bande de terrain de largeur étendue. Les itérations déterminent le nombre de fois que chaque bande de terrain est parcourue.

Pour chaque autre bandeau, le traitement d'asservissement de la ligne de visée des balayages sur cette même bande de terrain, doit aussi assurer que l'image courante (= en cours d'acquisition) projetée au sol ait un fort taux recouvrement avec l'image correspondante du premier bandeau généré. Dit autrement, chaque image d'un autre bandeau est acquise pour une portion de cette bande de terrain avec un taux de recouvrement avec la (ou les) image(s) du premier bandeau pour la même portion de bande de terrain. Ce taux de recouvrement est supérieur à un fort taux prédéterminé de recouvrement, par exemple de 80%. Ainsi, les images recouvrantes (selon ce taux) d'un bandeau à l'autre, issues d'une même portion de terrain sont respectivement acquises au cours de ces itérations selon différentes directions de la ligne de visée (considérées dans le repère 3D de la scène) c'est-à-dire selon différents angles de vue. En effet, pour un taux de recouvrement fixé par exemple à 80%, au moins 80% des points de la bande de terrain initiale sont « revus » lors des acquisitions d'images de chaque itération ; dit autrement, au moins 80% des points du bandeau d'images acquis initialement se retrouvent dans chaque bandeau respectivement acquis au cours des itérations. Ainsi par exemple sur la figure 1a, des points de la scène en bas à gauche de la bande 4a, sont présents dans deux images 1 : l'une prise lorsque le porteur 2 est dans une première position P1 sur sa trajectoire 20, l'autre prise lorsque le porteur est dans une autre position P2. On retrouve le même principe dans la figure 1c, sauf que cette fois-ci les nombres indiquent un exemple de positions successives de l'empreinte au sol des images acquises par le porteur en position 2 lors du balayage des 2 bandes initiales, ces empreintes successives correspondant à des instants successifs t1 , t2, ..., t6 d'acquisition de ces images. On note que les images acquises lors du deuxième balayage peuvent très bien ne pas correspondre aux images acquises lors du premier balayage et les chevaucher, tout en garantissant un recouvrement maximal de l'ensemble des images sur les 2 bandes initiales. Une rotation de la ligne de visée du capteur peut cependant aussi être appliquée pour assurer un alignement parfait des images produites. Cette rotation, si elle est effectuée, est réalisée par asservissement lui-même pouvant être contrôlé par traitement d'images. Le traitement des images acquises permet de générer des bandeaux d'images étendus vus suivant différents angles d'incidence et chaque bandeau d'images peut être régénéré temporellement afin que chaque point de la scène imagé dans ce bandeau puisse être vu temporellement suivant différentes directions. On réitère par exemple jusqu'à ce que la scène balayée ne puisse plus être parcourue par la ligne de visée (capteur hors de portée ou angle de ligne de visée dépassant un seuil admissible).

On peut remarquer qu'un « step-and-stare » classique qui est illustré figure 2a, est connu et appliqué pour balayer rapidement le sol en latéral en continu (avec des petits sauts frontaux) : il génère ainsi un bandeau d'images longitudinal étendu, mais le bandeau est généré une seule fois par ces moyens classiques et est forcément vu suivant un seul point de vue (ce mode de balayage est appelé « strip-map »). Il diffère donc du balayage selon l'invention qui génère plusieurs bandeaux vus suivant des points de vue différents sur une même zone de terrain, et exclut la possibilité de couvrir plusieurs bandes de terrain. Un autre mode connu est celui du mode « spot-light » qui consiste à asservir la ligne de visée sur un même endroit du sol. Il exploite le cas échéant du traitement d'images pour asservir et stabiliser la ligne de visée sur un même endroit du sol (le traitement d'images corrèle les différentes images successives du capteur pour maintenir un point fixe au sol). Il résulte de ce mode une succession d'images dont l'empreinte au sol ne dépasse pas la taille de chaque image projetée au sol. L'intersection des images projetées définit alors la zone du terrain vue suivant différents angles par les différentes images successives. Là encore, ce mode diffère beaucoup du balayage selon l'invention puisque la zone de terrain restituée est très localisée (restreinte à l'intersection des projections d'images au sol) et ne correspond pas à une bande de terrain étendue comme dans l'application que nous proposons. Selon l'invention, on génère un ou plusieurs bandeaux d'images parcourant une ou plusieurs bandes de terrain à forte étendue longitudinale, qui sont réitérés au moins deux fois, typiquement entre 5 et 20 fois voire plus, en parcourant la ou les bandes de terrain par des balayages successifs comme montré figure 2b, ce qui a pour conséquence que chaque point de la scène présent dans des bandeaux successifs soit vu temporellement suivant différentes directions d'angles de la ligne de visée du capteur. Les différences angulaires de direction des angles de lignes de visée du capteur sur une même portion de zone de terrain sont limitées typiquement à un angle maximum de 30° de manière à pouvoir les utiliser plus facilement dans un traitement d'images de mise en correspondance pour en extraire les caractéristiques ou faire de la reconstruction 3D. L'unité de traitement favorise l'établissement d'un nombre minimum de points de vues différents (typiquement entre 5 à 20 vues différentes sur une portion d'image acquise) par rapport à l'étendue des acquisitions sur le terrain.

Pour chaque autre bandeau, le traitement d'asservissement de la ligne de visée des balayages sur cette même bande de terrain, doit aussi assurer qu'au sein de chaque autre bandeau, les images adjacentes recouvrantes le soient de préférence avec un faible taux de recouvrement minimal prédéterminé, pour que chaque autre bandeau d'images soit également un bandeau continu, comme déjà indiqué pour le bandeau initial.

Ce traitement de la ligne de visée garantit que les images prises sur une même portion quelconque d'une bande de terrain à des instants et lignes de visée différents, sont toutes recouvrantes avec un fort taux de recouvrement (80% dans notre exemple). On peut ainsi en extraire une zone de terrain commune contenant toutes les images et qui est suffisamment grande et exploitable pour obtenir sur une longue étendue de terrain qui correspond à l'intersection des bandeaux longitudinaux restitués (fermés ou non sur eux-mêmes, voir figures 1a ou 1b) une zone quelconque sur laquelle on peut visualiser des images avec les points de vue différents du porteur visualisant cette zone. Pour une zone de terrain donnée couverte par les différents bandeaux restitués, il est très aisé, connaissant les coordonnées géographiques de la zone choisie, d'extraire dans les différents bandeaux les images correspondantes qui visualisent la zone suivant les différents points de vue du porteur ayant balayé cette zone. Ainsi un même point de terrain est vu plusieurs fois à des instants différents et avec des points de vue différents.

Le traitement d'asservissement appliqué pour contrôler les mouvements de la ligne de visée peut être réalisé selon différents modes de réalisation.

Selon un premier mode de réalisation basé sur l'utilisation de moyens inertiels, ce traitement consiste à :
- projeter les images au sol en utilisant les moyens inertiels et à calculer les recouvrements entre deux images adjacentes projetées au sol lorsque ces images font partie d'un même bandeau d'images (la technique utilisée calcule par exemple la projection au sol de l'image courante et de l'image adjacente pour mesurer la transformation géométrique existant entre ces deux images projetées et mesurer leur taux de recouvrement ainsi que leur alignement effectif),
- faire la même chose entre l'image couramment acquise sur le bandeau d'images courant (en supposant que le bandeau courant provient d'un balayage de la ligne de visée qui soit autre que le balayage initial) et celle (ou celles) du bandeau d'images initial résultant du premier balayage sur la même zone de terrain que celle de l'image courante,
- vérifier que le recouvrement est inférieur à la consigne (=taux prédéterminé) visée pour le faible recouvrement entre deux images d'un même bandeau (inférieur à 10% par exemple) et qu'il soit supérieur à la consigne relative au fort recouvrement devant exister entre les images d'un autre bandeau avec celles du bandeau initial (supérieur à 80% par exemple),
- vérifier la même chose pour l'alignement désiré entre images,
- si le recouvrement est inférieur à la consigne visée, ralentir le mouvement relatif de la ligne de visée et l'accélérer dans le cas contraire (ou l'inverse suivant que le recouvrement se fait à gauche dans le sens du mouvement ou à droite, ou suivant qu'il s'agisse du recouvrement entre images sur une même zone de terrain prise à des instants différents et pour un balayage différent, ou du recouvrement d'images adjacentes à l'intérieur d'un même bandeau et au cours d'un même balayage),
- même chose pour l'alignement des images, en le corrigeant si nécessaire en agissant sur le mouvement rotatif de la ligne de visée (quand ce mouvement est possible).

Ce type d'asservissement est suffisant quand les informations de position angulaire de ligne de visée sont suffisamment précises relativement au mouvement du porteur (position absolue de ligne de visée ayant une dérive faible vis-à-vis du déplacement du porteur) et qu'on a une connaissance suffisamment précise de l'environnement pour pouvoir calculer une projection de l'image au sol, à partir d'un modèle du terrain fourni par le système de navigation par exemple. Ces conditions sont réunies dans beaucoup d'applications, par exemple pour un véhicule terrestre ayant un GPS et une IMU MEMS, muni d'une caméra champ moyen (typiquement 40°) balayant rapidement la scène proche ; mais ce n'est plus le cas pour un porteur se déplaçant très rapidement et ayant une caméra très petit champ balayant une scène à très grande distance avec une centrale inertielle dont les erreurs de mesure ou de dérive angulaires sont largement supérieures à la résolution du pixel de la caméra.

Dans le cas où la précision d'information sur la position angulaire de la ligne de visée et/ou sur le terrain, obtenue par les moyens inertiels, est insuffisante pour permettre une projection des images au sol suffisamment précise pour obtenir les recouvrements et alignements requis, on emploie de préférence un asservissement d'un deuxième type basé sur un traitement d'images :
∘ Mise en correspondance des images par des techniques connues de traitement d'images (corrélation de pixels de sous-images, mise en correspondance de primitives), calcul des transformations géométriques existant entre ces images à partir des mises en correspondance précédentes, pour mesurer directement le recouvrement et l'alignement de celles-ci une fois projetées au sol. Cette mise en correspondance s'applique sur des images adjacentes provenant d'un premier balayage sur une bande de terrain, mais aussi sur des images recouvrantes provenant des balayages successifs sur une même zone de terrain.
∘ Mesures des corrélations et transformations géométriques entre images projetées et celles du bandeau initial pour mesurer précisément la position des images projetées dans le repère des bandeaux initiaux, restitution à partir de ces mesures de la position angulaire des mouvements de la ligne de visée (en relatif et en absolu si on a une référence angulaire précise pour le premier bandeau).
∘ Exploitation de la position angulaire mesurée de la ligne de visée pour appliquer en conséquence les corrections angulaires avec un éventuel filtre temporel adapté. Ces corrections angulaires prennent en compte la position angulaire mesurée de la ligne de visée et celle qu'elle devrait avoir en imposant le critère de recouvrement « faible » sur les images adjacentes et le critère de recouvrement « fort » devant exister entre images recouvrantes obtenues lors des balayages successifs sur la même zone de terrain sous-jacente à des instants différents.

Il en résulte un positionnement très fin de la ligne de visée au sol qui n'aurait pas pu être réalisé sans l'apport du traitement d'images malgré le fait que le système ne soit pas doté de mesure directe suffisamment précise de position angulaire de la ligne de visée. En effet, lorsque les moyens inertiels sont insuffisants et que le cadre de l'application ne peut se contenter de la technique d'asservissement présentée plus haut, le traitement d'images permet de garantir de façon précise, qu'un pourcentage minimum de points de chaque bande de terrain choisie sera revisité par plusieurs balayages successifs sous des angles de point de vue et lignes de visée différents et que les images successives de chaque bandeau seront correctement jointées et alignées. Pour rappel : la ligne de visée est la direction reliant le capteur d'images du porteur à un point du terrain visé par celui-ci et les angles de point de vue sont les angles de cette ligne de visée dans le repère terrestre, autrement dit les angles absolus de la ligne de visée. Par définition, ces angles sont aussi les angles suivant lesquels un point du sol est vu par le capteur (et vice-versa les angles suivant lesquels un point du sol « voit » le capteur).

2) Une fois que la bande de terrain 4 a été balayée par ce balayage avant combiné, ou que les bandes de terrain 4a, 4b, 4c ont été balayées en parallèle, faire balayer la ligne de visée directement vers l'arrière comme indiqué sur la figure 2b par la flèche vers le bas, en pointillé, ou la flèche 8 de la figure 1a, de manière à ramener la ligne de visée à (ou quasiment à) la position initiale choisie dans la scène, mais sous un point de vue différent du fait de l'avancée du porteur. Ce balayage arrière ou contre-balayage peut être direct c'est-à-dire être effectué en un seul « step » (ou saut) : il est alors plus rapide que le balayage avant. Ce contre-balayage peut aussi ne pas être direct. En effet pendant le balayage arrière, on peut éventuellement réaliser des opérations de « step-and-stare » telles que décrites précédemment, suivant la vitesse et le temps impartis à celui-ci. Cette position au sol de la LdV, atteinte à l'issue de ce balayage arrière (= position retour) peut ne pas coïncider exactement avec la position au sol initiale de la LdV obtenue initialement sur le premier bandeau : un décalage, préalablement fixé par le système et typiquement de 20% de la taille de la première image est admis surtout en cas de bande déroulante comme on le verra plus loin. Cette position retour est déterminée par l'unité de traitement des images acquises jusqu'à cet instant. La position prévisionnelle de retour, au plus proche de la position de la ligne de visée initiale sur le premier bandeau prend en compte les contraintes interdites de l'asservissement (dites contraintes « dead-lock ») et le débattement maximal autorisé par le système pour la ligne de visée. Une dérive du porteur peut occasionner des corrections d'asservissement par le système afin de ramener la ligne de visée vers le point prévisionnel. Un traitement d'images, si celui-ci est appliqué, permet aussi de mesurer précisément l'écart angulaire entre la ligne de visée de l'image courante et celle de l'image initiale afin de corriger l'asservissement en conséquence.

La description précédente est basée sur un balayage avant, c'est-à-dire dans le sens de la trajectoire du porteur et un contre-balayage dans le sens opposé. Plus généralement on considère un balayage aller et un contre-balayage retour qui ne sont pas forcément liés à la trajectoire du porteur, mais dont le sens est choisi de telle sorte à minimiser les contraintes de débattement de la ligne de visée et à optimiser le nombre d'aller-retour effectués par la ligne de visée. On peut ainsi adapter le choix du sens de balayage à des bandes refermées sur elles-mêmes ou fortement inclinées par rapport à la trajectoire. On peut aussi avoir comme balayage aller un balayage selon le sens opposé à la trajectoire (= un balayage arrière), avec alors comme contre-balayage, un balayage avant.

Les mouvements frontaux et latéraux de « step-and-stare » imposés sur la ligne de visée permettent de balayer le nombre de bandes voulues, et déterminent le nombre de fois qu'elles sont parcourues ainsi que la forme et l'orientation voulues de chaque bande.

Selon un cas particulier illustré figure 1b, la scène au sol forme une ou plusieurs bandes 4 qui peuvent être ouvertes ou fermées pour revêtir par exemple la forme d'un cercle ou d'un rectangle. Plusieurs formes concentriques peuvent être établies simultanément autour d'une forme initiale, rejoignant l'idée de bandes distinctes. Le balayage d'une bande fermée peut se faire en un balayage aller seul répété en boucle tout le long des bandes fermées (dans le cas où celles-ci entourent le porteur comme c'est le cas dans la figure 1b, le balayage en boucle de la ligne de visée se fait tout autour du porteur en balayant successivement les différentes bandes comme l'illustre plus particulièrement la figure 1c) ou en balayages aller-retour répétés entre 2 points de la bande, suivant le choix fait sur l'asservissement. Les bandes peuvent aussi se croiser ou se toucher par endroits.

Le procédé propose 2 modes de balayage aller retour suivant qu'on veut ou non maximiser le nombre de points de vue sur le sol.

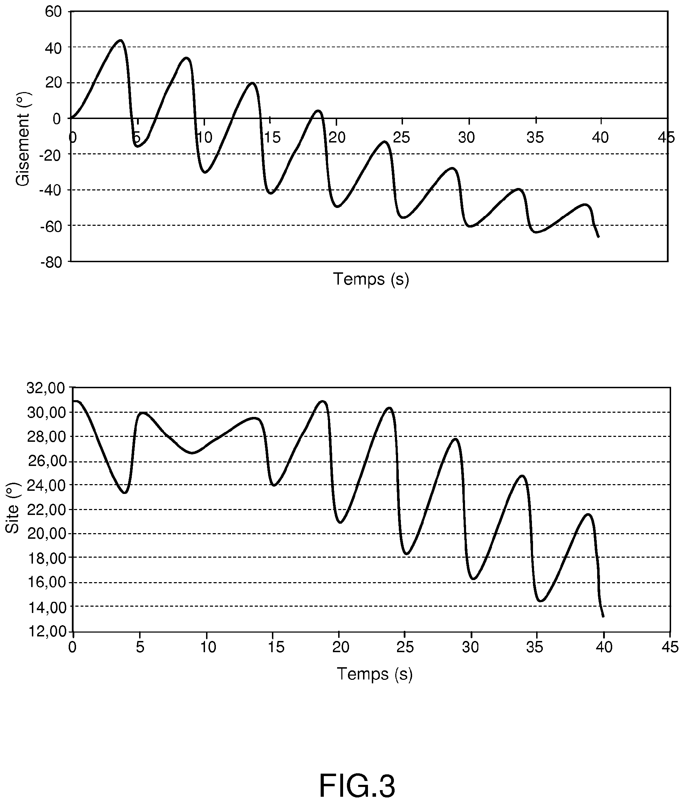

Un premier mode de balayage et contre-balayage répétés est adapté pour maximiser le nombre de points de vue sur le sol pour une taille de bande donnée. La figure 3 illustre les mouvements de la ligne de visée dans le cas des balayages aller et retour en site/gisement effectués pour une scène au sol de 10km de longueur sur 500m de large, à partir d'un POD embarqué sous avion balayant cette scène à 6 km de hauteur avec une distance latérale de la bande par rapport à l'aplomb du POD de 8 km, et un débattement angulaire maximal de +/- 45°. Dans l'exemple présenté, les différents points du sol peuvent être vus jusqu'à 16 fois à des instants différents et des points de vue différents.

Selon un deuxième mode de réalisation, la scène au sol forme une ou plusieurs bandes qui évoluent au cours de l'avancée du porteur. Il s'agit par exemple de bandes déroulantes qui se déroulent suivant l'avancée du porteur, et qui ne sont donc pas limitées dans le sens de la longueur. Les bandeaux d'images qui sont générés sont réactualisés en permanence suivant différents points de vue angulaires pendant toute la durée du déplacement du porteur sans discontinuité. La longueur de la bande correspond donc à peu de chose près à la distance parcourue par le porteur (plusieurs dizaines ou centaines de kilomètres dans le cas d'un aéronef).

Dans le cas du deuxième mode où l'on veut visualiser plusieurs bandes suivant différents points de vue en continu, on démontre qu'il suffit d'avoir un débattement constant dans les figures de balayages aller et retour, et qu'en synchronisant convenablement, on aboutit à la production de bandeaux correspondant à des bandes décalées au sol (selon la direction de la trajectoire du porteur) dont les points sont revus successivement dans le temps suivant différents points de vue angulaires. Le nombre de fois que tous les points de la bande sont vus dépend directement de la vitesse maximale de balayage du faisceau au sol, mais sera toujours moindre que le premier mode de balayage et contre-balayage décrit ci-dessus. Dans notre exemple, il y aura 5 vues angulaires différentes de chaque point du terrain survolé en continu.

Préalablement à la mise en œuvre de cet asservissement de la LdV selon l'invention, on optimise les paramètres d'asservissement en fonction :
- de la distance moyenne et de l'étendue spatiale de la scène à balayer,
- des contraintes de formes des bandes associées à cette scène,
- du taux moyen désiré de recouvrement des images de plusieurs bandeaux et issues d'une même portion de bande de terrain à balayer, et du taux de recouvrement moyen de deux images adjacentes d'un même bandeau,
- de la vitesse maximale et de l'accélération maximale du balayage,
- de l'inclinaison, du champ de vue, de la résolution du capteur et,
- du temps d'intégration nécessaire pour imager correctement la scène,
pour déterminer :
- la taille des images au sol balayées par le capteur à un instant t,
- le déplacement minimal (en step latéral et frontal) devant être effectué par le balayage pour recouvrir partiellement les différentes images entre elles, afin de produire un bandeau d'images continu. Ce déplacement est calculé à chaque instant en prenant en compte la disposition au sol de 2 images adjacentes courantes, mais il peut aussi être ajusté globalement après un premier balayage angulaire complet ;
- la vitesse de balayage instantanée ou la vitesse de balayage moyenne nécessaire pour réaliser la condition précédente et pour respecter le temps d'intégration nécessaire ainsi que le temps nécessaire pour réaliser la figure de micro-balayage « step-and-stare » associée ;
- le débattement angulaire maximal (=angle maximal que parcourt la LdV) pouvant être réalisé qui garantit que les contraintes de vitesse de balayage et d'accélération maximale du capteur ne seront pas dépassées ;
- le nombre maximal de balayages aller-retour pour couvrir la scène au sol et le débattement latéral maximum pouvant être réalisés ;
- le taux moyen de recouvrement maximal pouvant effectivement être réalisé dans le recouvrement des bandeaux successifs et du taux moyen minimal de recouvrement entre images adjacentes d'un même bandeau qu'il faut demander.

Les balayages aller se font à une vitesse prenant en compte comme indiqué ci-dessus les différentes contraintes du système : trajectoire du porteur, taille au sol des images, temps d'intégration nécessaire, vitesse et accélération maximales des asservissements suivant différents axes (par exemple site/gisement qui n'ont pas forcément les mêmes contraintes).

Les contre-balayages (balayage complet en sens inverse du précédent) directs se font à vitesse maximale, sans tenir compte des temps d'intégration ou des données système liées à l'imagerie (sauf si le système le permet), et sont uniquement liés aux vitesses maximales et accélérations maximales des asservissements.

Les balayages aller et retour doivent être adaptés angulairement pour assurer un balayage ou contre-balayage sur une même portion du sol.

Le but de cet asservissement est de permettre de créer des bandeaux d'images contigües ou recouvrantes, régénérés à intervalles temporels réguliers suivant des points de vue angulaires différents. Ceci permet à l'opérateur :
- De voir les différents éléments de la scène suivant des points de vue différents. Cela permet en particulier le démasquage d'objets qui pourraient être occultés par des éléments de la scène, mais aussi de voir les différentes facettes d'un objet de la scène pour mieux le reconnaître.
- De reconstruire avec des algorithmes et logiciels appropriés et connus les structures 3D de la scène et d'habiller cette reconstruction avec les différentes images des bandeaux recouvrant ces structures.
- De permettre à d'autres algorithmes et logiciels de restituer une ortho-photographie conforme de différentes parties de la scène et suivant différents plans. Cet aspect n'est pas obtenu ou seulement sur une très faible étendue par d'autres techniques de balayage.

Le procédé peut être généralisé à l'asservissement d'autres types de capteurs (radar, lidar,...).

Le procédé est applicable à un aéronef comme dans les exemples présentés, mais est tout à fait applicable à tout porteur en mouvement (véhicule terrestre, bateau, drone courte ou longue portée,...).

A partir des images acquises selon ce procédé, on peut envisager comme applications industrielles :
- des applications SAR ou lidar spécifiques demandant des passages à inclinaisons différentes,
- la génération de cartes mosaïquées conformes très résolues sur une large étendue, y compris à très grande distance en utilisant une optique à faible champ et haute résolution,
- la génération de ces même cartes à des instants différents avec des angles de présentation différents, ce qui permet de faciliter la détection d'objets à faible contraste ou partiellement masqués,
- la possibilité de faire de la reconstruction 3D sur une large étendue spatiale, à haute résolution et à grande distance.
- ...

La présente invention peut s'implémenter à partir d'éléments matériel et/ou logiciel. L'asservissement de la ligne de visée peut notamment s'implémenter à partir d'un produit programme d'ordinateur, ce programme d'ordinateur comprenant des instructions de code permettant d'effectuer les étapes du procédé d'asservissement. Il est enregistré sur un support lisible par ordinateur. Le support peut être électronique, magnétique, optique, électromagnétique ou être un support de diffusion de type infrarouge. De tels supports sont par exemple, des mémoires à semi-conducteur (Random Access Memory RAM, Read-Only Memory ROM), des bandes, des disquettes ou disques magnétiques ou optiques (Compact Disk - Read Only Memory (CD-ROM), Compact Disk - Read/Write (CD-R/W) et DVD).

## Revendications

1. Procédé d'acquisition d'images d'une scène au sol prédéterminée, à partir d'un porteur (2) en déplacement selon une trajectoire (20), et équipé d'un capteur optique ayant une ligne de visée (3), qui comprend une étape d'acquisition par le capteur d'images (1) successives de la scène au cours du déplacement du porteur, et une étape d'asservissement de la direction angulaire de la ligne de visée par une unité de traitement reliée au capteur, l'acquisition étant réalisée:
- pour une première position (P1) du porteur sur sa trajectoire, avec un asservissement de la direction angulaire de la ligne de visée permettant d'effectuer un balayage d'une bande de terrain (4, 4a) prédéterminée de la scène, dit balayage aller, combiné à un balayage en mode « step-and-stare » un premier bandeau d'images (40, 40a1) étant ainsi acquis,
- et en ce qu'au moins un autre bandeau d'images (40a2) est acquis sur une même zone de terrain que le premier bandeau en réitérant ces étapes de balayage pour au moins une autre position (P2) du porteur sur sa trajectoire, chaque image d'un autre bandeau étant acquise pour une portion de bande de terrain avec un taux de recouvrement avec la (ou les) image(s) du premier bandeau pour la même portion de bande de terrain, supérieur à un fort taux prédéterminé de recouvrement, les images recouvrantes d'un bandeau à l'autre issues d'une même portion de terrain étant ainsi respectivement acquises au cours de ces itérations selon différentes directions de la ligne de visée,
**caractérisé en ce que** le mode « step-and-stare » qui comporte des micro-mouvements de translation dits « steps » présentant une amplitude contrôlée par l'unité de traitement, comprend :
∘ au moins un « step » à composante principale perpendiculaire au balayage aller et dit latéral (5), combiné à
∘ au moins un « step » (7) à composante principale parallèle au balayage aller et dit longitudinal,
∘ un micro-mouvement « stare » bi-axe pour compenser un mouvement de translation de la ligne de visée pendant l'acquisition de chaque image,
et **en ce que** l'asservissement de la direction angulaire de la ligne de visée est réalisé par traitement d'images sur les images acquises.

2. Procédé d'acquisition d'images selon la revendication précédente, **caractérisé en ce que** la première position (P1) et les positions (P2) successives du porteur servant de base au balayage sont multiples et décomposées en autant de positions qu'il y a d'images lors du balayage lorsque le porteur se déplace au cours du balayage.

3. Procédé d'acquisition d'images selon l'une des revendications précédentes, **caractérisé en ce que** l'acquisition est réalisée pour K positions du porteur différentes, K étant compris entre 5 et 20.

4. Procédé d'acquisition d'images selon l'une des revendications précédentes, **caractérisé en ce que** l'asservissement de la direction angulaire de la ligne de visée est réalisé par traitement d'images sur les images acquises pour qu'au sein d'un même bandeau, des images adjacentes soient alignées avec une qualité d'alignement supérieure à une qualité prédéfinie.

5. Procédé d'acquisition d'images selon l'une des revendications précédentes, **caractérisé en ce que** l'asservissement de la direction angulaire de la ligne de visée est réalisé par traitement d'images sur les images acquises pour qu'au sein d'un même bandeau, des images adjacentes aient un taux de recouvrement supérieur à un faible taux de recouvrement prédéterminé, de manière à obtenir un bandeau continu.

6. Procédé d'acquisition d'images selon l'une des revendications précédentes, **caractérisé en ce que** l'asservissement de la direction angulaire de la ligne de visée est réalisé par traitement d'images sur les images acquises pour que les images provenant de deux bandeaux sur une même portion de scène soient alignées avec une qualité d'alignement supérieure à une qualité prédéfinie.

7. Procédé d'acquisition d'images selon l'une des revendications précédentes, **caractérisé en ce que** le micro-mouvement « stare » bi-axe est en outre associé à un mouvement contre-rotatif de la ligne de visée (3) déterminé par l'unité de traitement, pour compenser un mouvement de rotation de la ligne de visée pendant l'acquisition d'image.

8. Procédé d'acquisition d'images selon l'une des revendications précédentes, **caractérisé en ce qu'**au moins une autre bande (4b, 4c) de terrain prédéterminée est associée à la scène et est parcourue par le balayage effectué à partir desdites positions du porteur et **en ce que** le mode « step-and-stare » comprend en outre au moins un mouvement latéral (6) de changement de bande de terrain, pour passer d'une bande de terrain à une autre bande de terrain.

9. Procédé d'acquisition d'images selon la revendication précédente, **caractérisé en ce que** le mouvement latéral (6) de changement de bande de terrain est combiné à un mouvement frontal de changement de bande.

10. Procédé d'acquisition d'images selon l'une des revendications précédentes, **caractérisé en ce que** le balayage aller est effectué dans le sens de la trajectoire (20).

11. Procédé d'acquisition d'images selon l'une des revendications précédentes, **caractérisé en ce qu'**un contre-balayage inverse au balayage aller, dit contre-balayage, est effectué suite au balayage aller et avant les réitérations.

12. Procédé d'acquisition d'images selon la revendication précédente, **caractérisé en ce que** le contre-balayage est un contre-balayage direct (8).

13. Procédé d'acquisition d'images selon la revendication 11, **caractérisé en ce que** des images (1) sont acquises pendant le contre-balayage qui est combiné à un balayage en mode « step-and-stare » avec des micro-mouvements de translation dits « steps » qui présentent une amplitude contrôlée par l'unité de traitement pour que les images (1) successivement acquises se recouvrent partiellement, qui comprend :
a. au moins un « step » perpendiculaire au contre-balayage et dit latéral, pour balayer la zone latéralement, combiné à
b. au moins un « step » parallèle au contre-balayage et dit step longitudinal pour balayer la zone longitudinalement,
c. un micro-mouvement « stare » bi-axe pour compenser un mouvement de translation de la ligne de visée pendant l'acquisition de chaque image.

14. Procédé d'acquisition d'images selon l'une des revendications précédentes, **caractérisé en ce qu'**au moins une bande de terrain se déroule avec l'avancée du porteur.

15. Procédé d'acquisition d'images selon l'une des revendications précédentes, **caractérisé en ce qu'**au moins une bande de terrain (4a, 4b) est refermée sur elle-même.

16. Procédé d'acquisition d'images selon l'une des revendications précédentes, **caractérisé en ce qu'**au moins deux bandes de terrain (4) parcourues par la ligne de visée se croisent ou se touchent par endroits.

17. Procédé d'acquisition d'images selon l'une des revendications précédentes, **caractérisé en ce que** le porteur (2) est un aéronef.

18. Un produit programme d'ordinateur, ledit programme d'ordinateur comprenant des instructions de code permettant d'effectuer les étapes du procédé d'acquisition d'images selon l'une quelconque des revendications 1 à 17, lorsque ledit programme est exécuté sur un ordinateur.

## Patentansprüche

1. Verfahren zum Erfassen von Bildern einer vorbestimmten Szene am Boden von einem Trägers (2), der sich entlang einer Bahn (20) bewegt, ausgestattet mit einem optischen Sensor mit einer Sichtlinie (3), das einen Schritt des Erfassens, mit dem Sensor (1), von aufeinanderfolgenden Bildern der Szene im Laufe der Bewegung des Trägers und einen Schritt der Servosteuerung der Winkelrichtung der Sichtlinie durch eine mit dem Sensor verbundene Verarbeitungseinheit beinhaltet, wobei die Erfassung realisiert wird:
- für eine erste Position (P1) des Trägers auf seiner Bahn mit einer Servosteuerung der Winkelrichtung der Sichtlinie, die es zulässt, einen vorbestimmten Geländestreifen (4, 4a) der Szene abzutasten, Vorwärtsabtastung genannt, kombiniert mit einer Abtastung im "Step-and-Stare" Modus eines ersten Bandes von so erfassten Bildern (40, 40al),
- und dadurch, dass wenigstens ein anderes Bilderband (40a2) in einer selben Geländezone wie das erste Band erfasst wird, durch Wiederholen dieser Abtastschritte für wenigstens eine andere Position (P2) des Trägers auf seiner Bahn, wobei jedes Bild eines anderen Bandes für einen Geländestreifenabschnitt mit einer Überlappung mit den ein oder mehreren Bildern des ersten Bandes für denselben Geländebandabschnitt erfasst wird, die größer ist als eine vorbestimmte hohe Überlappung, wobei die überlappenden Bilder von einem Band zum anderen, die von einem selben Geländeabschnitt kommen, somit jeweils im Laufe dieser Iterationen in unterschiedlichen Richtungen der Sichtlinie erfasst werden,
**dadurch gekennzeichnet, dass** der "Step-and-Stare" Modus, der "Steps" (Schritte) genannte Translationsmikrobewegungen umfasst, die eine von der Verarbeitungseinheit geregelte Amplitude aufweisen, Folgendes beinhaltet:
∘ wenigstens einen "Step" (Schritt) mit einer Hauptkomponente lotrecht zur Vorwärtsabtastung, lateral (5) genannt, kombiniert mit
∘ wenigstens einem "Step" (7) mit einer Hauptkomponente parallel zur Vorwärtsabtastung, longitudinal genannt,
∘ eine biaxiale "Stare" (Blicken) Mikrobewegung zum Kompensieren einer Translationsbewegung der Sichtlinie während der Erfassung jedes Bildes,
dadurch, dass die Servosteuerung der Winkelrichtung der Sichtlinie durch Verarbeiten von Bildern auf den erfassten Bildern realisiert wird.

2. Verfahren zum Erfassen von Bildern nach dem vorherigen Anspruch, **dadurch gekennzeichnet, dass** die erste Position (P1) und die aufeinanderfolgenden Positionen (P2) des als Basis für die Abtastung dienenden Trägers mehrfach sind und in so viele Positionen zerlegt werden, wie es bei der Abtastung Bilder gibt, wenn sich der Träger im Laufe der Abtastung bewegt.

3. Verfahren zum Erfassen von Bildern nach einem der vorherigen Ansprüche, **dadurch gekennzeichnet, dass** die Erfassung für K unterschiedliche Positionen des Trägers realisiert wird, wobei K zwischen 5 und 20 liegt.

4. Verfahren zum Erfassen von Bildern nach einem der vorherigen Ansprüche, **dadurch gekennzeichnet, dass** die Servosteuerung der Winkelrichtung der Sichtlinie durch Verarbeiten von Bildern auf den erfassten Bildern realisiert wird, damit im Innern eines selben Bandes benachbarte Bilder mit einer Ausrichtungsqualität ausgerichtet sind, die höher ist als eine vordefinierte Qualität.

5. Verfahren zum Erfassen von Bildern nach einem der vorherigen Ansprüche, **dadurch gekennzeichnet, dass** die Servosteuerung der Winkelrichtung der Sichtlinie durch Verarbeiten von Bildern auf den erfassten Bildern realisiert wird, damit im Innern eines selben Bandes benachbarte Bilder eine Überlappung haben, die höher ist als eine niedrige vorbestimmte Überlappung, um ein kontinuierliches Band zu erhalten.

6. Verfahren zum Erfassen von Bildern nach einem der vorherigen Ansprüche, **dadurch gekennzeichnet, dass** die Servosteuerung der Winkelrichtung der Sichtlinie durch Verarbeiten von Bildern auf den erfassten Bildern realisiert wird, damit die von zwei Bändern kommenden Bilder auf einem selben Szenenabschnitt mit einer Ausrichtungsqualität ausgerichtet sind, die höher ist als eine vordefinierte Qualität.

7. Verfahren zum Erfassen von Bildern nach einem der vorherigen Ansprüche, **dadurch gekennzeichnet, dass** die biaxiale "Stare" Mikrobewegung ferner mit einer Gegenrotationsbewegung der Sichtlinie (3) assoziiert ist, bestimmt durch die Verarbeitungseinheit, zum Kompensieren einer Rotationsbewegung der Sichtlinie während der Bilderfassung.

8. Verfahren zum Erfassen von Bildern nach einem der vorherigen Ansprüche, **dadurch gekennzeichnet, dass** wenigstens ein anderer vorbestimmter Geländestreifen (4b, 4c) mit der Szene assoziiert ist und von der Abtastung durchlaufen wird, die auf der Basis der Positionen des Trägers bewirkt wird, und dadurch, dass der "Step-and-Stare" Modus ferner wenigstens eine laterale (6) Geländestreifenänderungsbewegung beinhaltet, um von einem Geländestreifen zu einem anderen Geländestreifen zu passieren.

9. Verfahren zum Erfassen von Bildern nach dem vorherigen Anspruch, **dadurch gekennzeichnet, dass** die laterale (6) Geländestreifenänderungsbewegung mit einer frontalen Streifenänderungsbewegung kombiniert wird.

10. Verfahren zum Erfassen von Bildern nach einem der vorherigen Ansprüche, **dadurch gekennzeichnet, dass** die Vorwärtsabtastung in Richtung der Bahn (20) erfolgt.

11. Verfahren zum Erfassen von Bildern nach einem der vorherigen Ansprüche, **dadurch gekennzeichnet, dass** eine zur Vorwärtsabtastung umgekehrte Gegenabtastung, Gegenabtastung genannt, nach der Vorwärtsabtastung und vor den Wiederholungen erfolgt.

12. Verfahren zum Erfassen von Bildern nach dem vorherigen Anspruch, **dadurch gekennzeichnet, dass** die Gegenabtastung eine direkte Gegenabtastung (8) ist.

13. Verfahren zum Erfassen von Bildern nach Anspruch 11, **dadurch gekennzeichnet, dass** Bilder (1) während der Gegenabtastung erfasst werden, die mit einer Abtastung im "Step-and-Stare" Modus mit "Steps" genannten Translationsmikrobewegungen kombiniert wird, die eine von der Verarbeitungseinheit geregelte Amplitude aufweisen, damit die aufeinanderfolgend erfassten Bilder (1) teilweise überlappen, das Folgendes beinhaltet:
a. wenigstens einen "Step" lotrecht zur Gegenabtastung, lateral genannt, zum lateralen Abtasten der Zone, kombiniert mit
b. wenigstens einem "Step" parallel zur Gegenabtastung, longitudinaler Step genannt, zum longitudinalen Abtasten der Zone,
c. eine biaxiale "Stare" Mikrobewegung zum Kompensieren einer Translationsbewegung der Sichtlinie während der Erfassung jedes Bildes.

14. Verfahren zum Erfassen von Bildern nach einem der vorherigen Ansprüche, **dadurch gekennzeichnet, dass** wenigstens ein Geländestreifen mit der Fortbewegung des Trägers abläuft.

15. Verfahren zum Erfassen von Bildern nach einem der vorherigen Ansprüche, **dadurch gekennzeichnet, dass** wenigstens ein Geländestreifen (4a, 4b) auf sich selbst geschlossen wird.

16. Verfahren zum Erfassen von Bildern nach einem der vorherigen Ansprüche, **dadurch gekennzeichnet, dass** sich wenigstens zwei von der Sichtlinie durchlaufene Geländestreifen (4) an Stellen kreuzen oder berühren.

17. Verfahren zum Erfassen von Bildern nach einem der vorherigen Ansprüche, **dadurch gekennzeichnet, dass** der Träger (2) ein Luftfahrzeug ist.

18. Computerprogrammprodukt, wobei das Computerprogramm Code-Befehle umfasst, die es zulassen, die Schritte des Verfahrens zum Erfassen von Bildern nach einem der Ansprüche 1 bis 17 durchzuführen, wenn das Programm auf einem Computer ausgeführt wird.

## Claims

1. Method for acquiring images of a predetermined ground scene, from a carrier (2) which moves along a trajectory (20) and which is provided with an optical sensor which has a line of sight (3), which comprises a step of acquiring, using the sensor, successive images (1) of the scene during the movement of the carrier, and a step of servocontrol of the angular direction of the line of sight using a processing unit which is connected to the sensor, the acquisition being carried out:
- for a first position (P1) of the carrier on the trajectory thereof, with servocontrol of the angular direction of the line of sight which enables a predetermined ground strip (4, 4a) of the scene to be scanned, referred to as forward scanning, combined with a scanning in "step-and-stare" mode, a first strip of images (40, 40a1) being acquired in this manner,
- and in that at least one other strip of images (40a2) is acquired in the same ground zone as the first strip by reiterating these scanning steps for at least one other position (P2) of the carrier on the trajectory thereof, each image of another strip being acquired for a ground strip portion with a coverage level with the image(s) of the first strip for the same ground portion greater than a high predetermined coverage level, the covering images from one strip to the other originating from the same ground portion thus being acquired during these iterations in different directions of the sight line, respectively,
**characterised in that** the "step-and-stare" mode which comprises micro translation movements referred to as "steps" having an amplitude which is controlled by the processing unit comprises:
o at least one "step" having a main component which is perpendicular to the forward scanning and which is referred to as a lateral step (5), combined with
o at least one "step" (7) having a main component which is parallel with the forward scanning and which is referred to as a longitudinal step,
o a biaxial micro-movement "stare" in order to compensate for a translation movement of the sight line during the acquisition of each image,
and **in that** the servocontrol of the angular direction of the sight line is carried out by means of image processing on the images acquired.

2. Image acquisition method according to the preceding claim, **characterised in that** the first position (P1) and the successive positions (P2) of the carrier which acts as a scanning base are multiple and broken down into the same number of positions as there are images during the scanning operation when the carrier moves during the scanning operation.

3. Image acquisition method according to either of the preceding claims, **characterised in that** the acquisition is carried out for K different positions of the carrier, K being between 5 and 20.

4. Image acquisition method according to any one of the preceding claims, **characterised in that** the servocontrol of the angular direction of the sight line is carried out by means of image processing on the images acquired so that within the same strip adjacent images are aligned with a quality of alignment which is greater than a predefined quality.

5. Image acquisition method according to any one of the preceding claims, **characterised in that** the servocontrol of the angular direction of the sight line is carried out by means of image processing on the images acquired so that within the same strip adjacent images have a coverage level which is greater than a predetermined low coverage level in order to obtain a continuous strip.

6. Image acquisition method according to any one of the preceding claims, **characterised in that** the servocontrol of the angular direction of the sight line is carried out by means of image processing on the images acquired so that the images originating from two strips on the same scene portion are aligned with a quality of alignment which is greater than a predefined quality.

7. Image acquisition method according to any one of the preceding claims, **characterised in that** the biaxial micro-movement "stare" is further associated with a counter-rotation movement of the sight line (3) determined by the processing unit in order to compensate for a rotation movement of the sight line during the image acquisition.

8. Image acquisition method according to any one of the preceding claims, **characterised in that** at least one other predetermined ground strip (4b, 4c) is associated with the scene and is travelled by the scanning carried out from the positions of the carrier and **in that** the "step-and-stare" mode further comprises at least one lateral movement (6) for changing a ground strip in order to move from one ground strip to another ground strip.

9. Image acquisition method according to the preceding claim, **characterised in that** the lateral ground strip changing movement (6) is combined with a front strip changing movement.

10. Image acquisition method according to any one of the preceding claims, **characterised in that** the forward scanning is carried out in the direction of the trajectory (20).

11. Image acquisition method according to any one of the preceding claims, **characterised in that** a counter-scanning in the opposite direction to the forward scanning, referred to as counter-scanning, is carried out following the forward scanning and before the reiterations.

12. Image acquisition method according to the preceding claim, **characterised in that** the counter-scanning is a direct counter-scanning (8).

13. Image acquisition method according to claim 11, **characterised in that** images (1) are acquired during the counter-scanning which is combined with a scanning in the "step-and-stare" mode with micro translation movements which are referred to as "steps" and which have an amplitude which is controlled by the processing unit so that the images (1) successively acquired overlap partially, which comprises:
a. at least one "step" which is perpendicular to the counter-scanning and which is referred to as lateral scanning in order to scan the zone laterally, combined with
b. at least one "step" which is parallel with the counter-scanning and which is referred to as a longitudinal step in order to scan the zone longitudinally,
c. a biaxial micro-movement "stare" in order to compensate for a translation movement of the sight line during the acquisition of each image.

14. Image acquisition method according to any one of the preceding claims, **characterised in that** at least one ground strip progresses with the advance of the carrier.

15. Image acquisition method according to any one of the preceding claims, **characterised in that** at least one ground strip (4a, 4b) is closed on itself.

16. Image acquisition method according to any one of the preceding claims, **characterised in that** at least two ground strips (4) which are travelled by the sight line intersect or touch each other at locations.

17. Image acquisition method according to any one of the preceding claims, **characterised in that** the carrier (2) is an aircraft.

18. A computer programme product, the computer programme comprising code instructions which allow the implementation of the steps of the image acquisition method according to any one of claims 1 to 17, when the programme is carried out on a computer.
